# EUROPEAN PATENT APPLICATION

(11) **EP 4 567 914 A1**
(43) Date of publication of application: **11.06.2025**
(21) Application number: 24767324.7
(22) Date of filing: 27.02.2024
(51) Int. Cl.: H01M 4/04, F26B 13/10, F26B 21/00, F26B 3/30, F26B 21/06, H05B 3/00

(54) **DRYING DEVICE FOR MANUFACTURING ELECTRODE**

(30) Priority: 08.03.2023 KR 20230030661
(71) Applicant: LG Energy Solution, Ltd., Seoul 07335 (KR)
(72) Inventor: LEE, Young Hyun, Daejeon 34122 (KR)
(74) Representative: Plasseraud IP
(86) International application number: PCT/KR2024/002484
(87) International publication number: WO 2024/186035

(57) **Abstract**

A drying device for electrode manufacturing according to one example of the present invention comprises a transfer part for transferring an electrode base material, a heating part for applying heat to the electrode base material under transfer, a position adjustment part for adjusting a position of the heating part, a first cooling part for spraying air toward the electrode base material located on the transfer part, and a control part for operating the first cooling part when the transfer of the electrode base material is stopped.

## Description

### Technical Field

The present invention relates to a drying device for electrode manufacturing, and relates to a drying device for electrode manufacturing capable of preventing overheating of an electrode base material due to residual heat of a heating part when running of the electrode base material is stopped.

This application claims the benefit of priority based on Korean Patent Application No. 10-2023-0030661 dated March 8, 2023, the disclosure of which is incorporated herein by reference in its entirety.

### Background Art

In lithium secondary batteries, charge and discharge are formed during a process that lithium ions moving from a positive electrode are reversibly inserted and detached to a negative electrode, and the positive electrode and the negative electrode are laminated so that a separator is interposed therebetween, thereby forming an electrode base material assembly.

Depending on a battery case shape, the secondary batteries are classified into cylindrical batteries and rectangular batteries in which the electrode base material assembly is embedded in a cylindrical or rectangular metal can, and pouch-type batteries in which the electrode base material assembly is embedded in a pouch-type case of an aluminum laminate sheet.

Also, the secondary battery can be formed by inserting an electrode base material assembly consisting of a positive electrode, a negative electrode, and a separator into a case and then sealing it. The electrode base material assembly can be formed by winding the positive electrode and the negative electrode in which the separator is interposed therebetween multiple times in the form of a jelly roll, or laminating them in multiple layers.

Meanwhile, when manufacturing an electrode base material such as the positive electrode or the negative electrode in the secondary battery, a process of drying the electrode base material is performed.

The electrode base material is dried while passing through a drying part in a roll-to-roll manner. The drying part dries the electrode base material using a heating lamp.

Meanwhile, when the roll-to-roll equipment is stopped, there is a problem that the stopped running electrode base material in a drying chamber is overheated due to the residual heat of the heated heating lamp, and when the electrode base material is re-run in an overheated state, temperature hunting occurs, or when the temperature of the electrode base material increases, there is a problem that the physical properties of the electrode change.

### Disclosure

### Technical Problem

The present invention is intended to provide a drying device for electrode manufacturing capable of preventing an electrode base material from overheating due to residual heat of a heating part when running of the electrode base material is stopped.

The present invention is intended to provide a drying device for electrode manufacturing capable of blocking residual heat of a heating part from being transferred to an electrode base material, and cooling the surface of the electrode base material, when running of the electrode base material is stopped.

### Technical Solution

A drying device for electrode manufacturing according to one example of the present invention comprises a transfer part for transferring an electrode base material, a heating part for applying heat to the electrode base material under transfer, a position adjustment part for adjusting a position of the heating part, a first cooling part for spraying air toward the electrode base material located on the transfer part, and a control part for operating the first cooling part when the transfer of the electrode base material is stopped.

The first cooling part may be provided to spray air toward a surface of the electrode base material located on the transfer part.

Also, the first cooling part may comprise a plurality of air injection parts for spraying air toward both sides of the electrode base material located on the transfer part, respectively.

In addition, the position adjustment part may be provided to move the heating part in a direction closer to or away from the electrode base material located on the transfer part.

Furthermore, when the transfer of the electrode base material is stopped, the control part may move the heating part in the direction away from the electrode base material located on the transfer part.

Also, the control part may stop an operation of the heating part when the transfer of the electrode base material is stopped.

In addition, the control part may operate the first cooling part when the heating part is moved in the direction away from the electrode base material.

Furthermore, the drying device for electrode manufacturing may further comprise a second cooling part for cooling the heating part.

Also, the control part may be provided to operate the second cooling part when the heating part is moved in the direction away from the electrode base material.

In addition, the heating part may comprise a heating lamp.

Furthermore, the heating part may comprise an IR lamp, and a reflective member for reflecting heat radiated from the IR lamp to the electrode base material.

Also, the second cooling part may be provided to spray air into a space between the IR lamp and the reflective member.

In addition, the control part may control an operation of the heating lamp so that the heating lamp outputs in a constant wavelength range when transferring the electrode base material.

Furthermore, the control part may control an operation of the heating part so that the heating part operates at a constant output value when transferring the electrode base material.

In addition, the transfer part may comprise a plurality of rolls for running the electrode base material.

### Advantageous Effects

As discussed above, the drying device for electrode manufacturing according to one example of the present invention has the following effects.

When the running of the electrode base material is stopped during performing the drying process, it is possible to prevent overheating of the electrode base material due to residual heat of the heating part.

Also, when the running of the electrode base material is stopped, it is possible to block transfer of residual heat of the heating part to the electrode base material, and it is possible to cool the surface of the electrode base material.

In addition, when stopping and re-running the electrode base material, it is possible to prevent temperature hunting of the electrode base material, and it is possible to lower the temperature of the heating part in a short time.

### Description of Drawings

Figure 1 is a schematic configuration diagram of a drying device for electrode manufacturing according to one example of the present invention.
Figures 2 to 4 are schematic diagrams for explaining one operating state of a drying device for electrode manufacturing according to one example of the present invention.
Figure 5 is a schematic diagram for explaining a second cooling part.
Figure 6 is a schematic diagram of a heating part.

### Mode for Invention

Hereinafter, a drying device for electrode manufacturing according to one example of the present invention will be described with reference to the accompanying drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

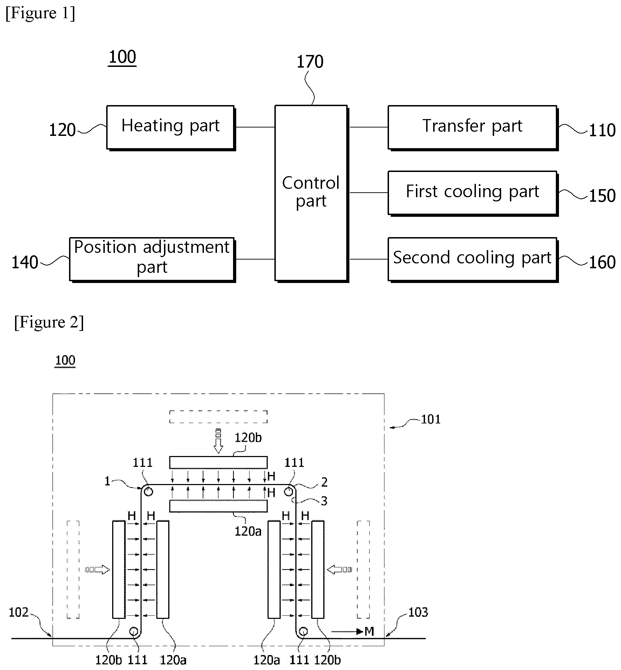

Figure 1 is a schematic configuration diagram of a drying device for electrode manufacturing (100, hereinafter, also referred to as 'drying device') according to one example of the present invention.

The drying device (100) for electrode manufacturing according to one example of the present invention comprises a transfer part (110), a heating part (120), a position adjustment part (140), and a first cooling part (150). In addition, the drying device (100) for electrode manufacturing may comprise a transfer part (110), a heating part (120), a position adjustment part (140), a first cooling part (150), and a second cooling part (160).

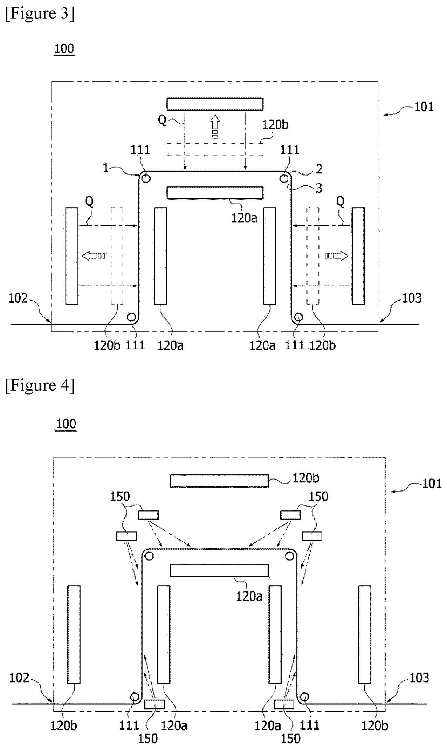

Figures 2 to 4 are schematic diagrams for explaining one operating state of a drying device (100) for electrode manufacturing according to one example of the present invention. Specifically, Figure 2 shows an operating state allowing to run (also referred to as 'transfer') the electrode base material and performing a drying process, Figure 3 shows an operating state in which the running of the electrode base material is stopped during the drying process, and Figure 4 shows an operating state of the first cooling part when the running of the electrode base material is stopped.

The drying device (100) comprises a transfer part (110) for transferring an electrode base material, a heating part (120: 120a, 120b) for applying heat to the electrode base material (1) under transfer, a position adjustment part (140) for adjusting a position of the heating part (120), a first cooling part (150) for spraying air toward the electrode base material (1) located on the transfer part (110), and a control part (170) for operating the first cooling part (150) when the transfer of the electrode base material (1) is stopped.

The drying device (100) comprises a drying chamber (110). The drying chamber (110) has an inlet (102) through which the electrode base material (1) is input and an outlet (103) through which the electrode base material (1) finishing the drying process is discharged to the outside. The electrode base material (1) has a coated portion to which the electrode slurry is applied and an uncoated portion to which the electrode slurry is not applied. The coated portion of the electrode base material (1) may be provided on one or both sides of the electrode base material (1).

The drying chamber (110) provides a space where the drying process of the electrode base material (1) is performed. A transfer part (110), a heating part (120: 120a, 120b), a position adjustment part (140), and a first cooling part (150) are disposed in the internal space of the drying chamber (110).

The transfer part (110) may comprise a plurality of rolls (111) for running the electrode base material (1). The plurality of rolls (111) may be arranged in the drying chamber (110) so that the electrode base material (1) moves while changing its running direction multiple times within the drying chamber (101).

The heating part (120) may comprise a heating lamp. In addition, the heating lamp may be an IR (infrared) lamp. When power is applied to the heating lamp, heat from the heating lamp is directed to the electrode base material (1), and the drying of the electrode base material (1) is performed.

The heating part (120) may be disposed on one or both sides of the electrode base material (1) along the running direction (M) of the electrode base material (1) within the drying chamber (101). Referring to Figure 2, the heating parts (120: 120a, 120b) may be disposed on both sides (2, 3) of the electrode base material along the running direction (M) of the electrode base material (1), respectively. That is, a plurality of heating parts (120) may be provided in the drying chamber (101), and the plurality of heating parts (120) may be disposed apart from each other at a predetermined interval along the running direction (M) of the electrode base material (1).

Referring to Figure 2, in this document, the heating part provided to provide heat toward a first surface (2) of the electrode base material (1) may be referred to as a first heating part (120b), and the heating part provided to provide heat toward a second surface (3) in the opposite direction of the first surface (2) of the electrode base material may be referred to as a second heating part (120a). The first heating part (120b) and the second heating part (120a) have the same structure, which may be distinguished depending on their positions within the drying chamber (101).

In addition, the position adjustment part (140) is provided to move the heating part in a direction closer to or away from the electrode base material (1) located on the transfer part (110). The position adjustment part (140) may be configured to include a cylinder or a motor, and the like. The position adjustment part (140) may be controlled by the control part (170), and the position adjustment part (140) may be provided to adjust the position of the heating part (120) when transferring the electrode base material (1) in the drying chamber (101) and when the running of the electrode base material (1) is stopped.

As one example, referring to Figures 2 and 3, the position adjustment part (140) may be provided to adjust the position of the first heating part (120b) providing heat toward the first surface (2) of the electrode base material (1). In this structure, the second heating part (120a) provided to provide heat toward the second surface (3) of the electrode base material (1) may be a position-fixed heating part, and the first heating part (120b) connected to the position adjustment part (140) may be a position-variable heating part.

In addition, the first cooling part (150) may be provided to spray air toward the surface (one or both sides) of the electrode base material (1) located on the transfer part (110). Referring to Figure 4, the first cooling part (150) may comprise a plurality of air injection parts for spraying air toward both sides (2, 3) of the electrode base material (1) located on the transfer part, respectively. At this time, the plurality of air injection parts may be disposed at a predetermined interval along the running direction of the electrode base material (1) in the drying chamber (101).

As the first cooling part (150) sprays air onto the surface of the electrode base material, it may provide an air curtain preventing residual heat from being transferred from the heating parts (120: 120a, 120b) to the electrode base material. In addition, the first cooling part (150) may perform the function of controlling the temperature of the electrode base material by cooling the electrode base material (1), as it sprays air onto the surface of the electrode base material.

Also, the control part (170) may move the heating part (120) in a direction away from the electrode base material (1) located on the transfer part (110) when the transfer of the electrode base material (1) is stopped. Referring to Figure 3, as one example, the control part (170) may move the second heating part (120b) in a direction away from the electrode base material (1) located on the transfer part (110) when the transfer of the electrode base material (1) is stopped.

In addition, the control part (170) may stop the operation of the heating parts (120: 120a, 120b) when the transfer of the electrode base material (1) is stopped.

Referring to Figures 3 and 4, the control part (170) may operate the first cooling part (150) when the heating part (120b) is moved in a direction away from the electrode base material (1).

In summary, when the running of the electrode base material (1) in the drying chamber (101) is stopped, the control part (170) stops the operation of the heating part (120).

However, even when the operation of the heating part (120) is stopped, the residual heat (Q) of the heating part (120) is transferred to the surface of the electrode base material (1). To prevent this, the control part (170) is provided so that it moves the heating part (120b) in a direction away from the electrode base material (1) located on the transfer part (110) when the transfer of the electrode base material (1) is stopped, and it operates the first cooling part (150) when the heating part (120b) moves in a direction away from the electrode base material (1).

At this time, as the first cooling part (150) sprays air onto the surface of the electrode base material (1), it is possible to provide an air curtain preventing residual heat (Q) from the heating parts (120: 120a, 120b) from being transferred to the electrode base material (1), and as it simultaneously sprays air onto the surface of the electrode base material (1), it is possible to cool the electrode base material (1).

Also, referring to Figure 2, when the electrode base material (1) in the drying chamber (1) is run, the control part (170) may stop the operation of the first cooling part (150), and the control part (170) may move the heating part (120b) in a direction closer to the electrode base material (1), operate the heating part (120), and perform the drying process of the electrode base material (1).

In addition, the drying device (100) for electrode manufacturing may comprise a second cooling part (160) for cooling the heating part (120).

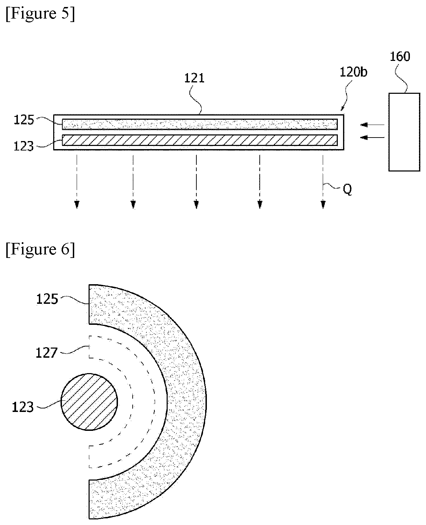

Figure 5 is a schematic diagram for explaining a second cooling part (160), and Figure 6 is a schematic diagram of a heating part.

The second cooling part (160) sprays air into the heating part (120) to perform a function of lowering the temperature of the heating part (120) in a short time.

As one example, upon stop of the running of the electrode base material, when the heating part (120b) is moved in a direction away from the electrode base material (1), the control part (170) may be provided to operate the second cooling part (160).

Referring to Figures 5 and 6, the heating part (120b) may comprise an IR lamp (123), and a reflective member (125) for reflecting heat radiated from the IR lamp (123) to the electrode base material.

Also, the second cooling part (160) may be provided to spray air into a space (127) between the IR lamp (123) and the reflective member (125).

In addition, the control part (170) may control an operation of the heating lamp (123) so that the heating lamp (123) outputs in a constant wavelength range when transferring the electrode base material (1).

Furthermore, the control part (170) may control an operation of the heating part so that the heating part operates at a constant output value when transferring the electrode base material (1).

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the drying device for electrode manufacturing according to one example of the present invention, when the running of the electrode base is stopped during performing the drying process, it is possible to prevent overheating of the electrode base material due to residual heat of the heating part

## Claims

1. A drying device for electrode manufacturing comprising:
a transfer part for transferring an electrode base material;
a heating part for applying heat to the electrode base material under transfer;
a position adjustment part for adjusting a position of the heating part;
a first cooling part for spraying air toward the electrode base material located on the transfer part; and
a control part for operating the first cooling part when the transfer of the electrode base material is stopped.

2. The drying device for electrode manufacturing according to claim 1, wherein
the first cooling part is provided to spray air toward a surface of the electrode base material located on the transfer part.

3. The drying device for electrode manufacturing according to claim 2, wherein
the first cooling part comprises a plurality of air injection parts for spraying air toward both sides of the electrode base material located on the transfer part, respectively.

4. The drying device for electrode manufacturing according to claim 2, wherein
the position adjustment part moves the heating part in a direction closer to or away from the electrode base material located on the transfer part.

5. The drying device for electrode manufacturing according to claim 4, wherein
when the transfer of the electrode base material is stopped, the control part moves the heating part in the direction away from the electrode base material located on the transfer part.

6. The drying device for electrode manufacturing according to claim 5, wherein
the control part stops an operation of the heating part when the transfer of the electrode base material is stopped.

7. The drying device for electrode manufacturing according to claim 5, wherein
the control part operates the first cooling part when the heating part is moved in the direction away from the electrode base material.

8. The drying device for electrode manufacturing according to claim 5, further comprising
a second cooling part for cooling the heating part.

9. The drying device for electrode manufacturing according to claim 8, wherein
the control part operates the second cooling part when the heating part is moved in the direction away from the electrode base material.

10. The drying device for electrode manufacturing according to claim 8, wherein
the heating part comprises a heating lamp.

11. The drying device for electrode manufacturing according to claim 8, wherein
the heating part comprises an IR lamp, and
a reflective member for reflecting heat radiated from the IR lamp to the electrode base material.

12. The drying device for electrode manufacturing according to claim 11, wherein
the second cooling part is provided to spray air into a space between the IR lamp and the reflective member.

13. The drying device for electrode manufacturing according to claim 1, wherein
the control part controls an operation of the heating lamp so that the heating lamp outputs in a constant wavelength range when transferring the electrode base material.

14. The drying device for electrode manufacturing according to claim 1, wherein
the control part controls an operation of the heating part so that the heating part operates at a constant output value when transferring the electrode base material.

15. The drying device for electrode manufacturing according to claim 1, wherein
the transfer part comprises a plurality of rolls for running the electrode base material.
